# EUROPÄISCHE PATENTSCHRIFT

(11) **EP 2 949 439 B1**
(45) Veröffentlichungstag und Bekanntmachung des Hinweises auf die Patenterteilung: **11.08.2021**
(21) Anmeldenummer: 15167292.0
(22) Anmeldetag: 12.05.2015
(51) Int. Cl.: B27M 1/08, B23Q 7/00, B23Q 7/05, B23Q 7/16

(54) **BEARBEITUNGSVORRICHTUNG UND BEARBEITUNGSVERFAHREN**
PROCESSING DEVICE AND PROCESSING METHOD
DISPOSITIF DE TRAITEMENT ET PROCÉDÉ DE TRAITEMENT

(30) Priorität: 12.05.2014 DE 102014208872
(43) Veröffentlichungstag der Anmeldung: 02.12.2015
(73) Patentinhaber: HOMAG GmbH, 72296 Schopfloch (DE)
(72) Erfinder: Rathgeber, Peter, 72280 Dornstetten (DE)
(74) Vertreter: Hoffmann Eitle

(56) Entgegenhaltungen:
- EP-A1- 1 657 200
- EP-A2- 0 469 231
- EP-A2- 2 243 606
- WO-A1-2005/113206
- DE-A1- 2 234 868
- DE-A1-102007 028 786
- DE-A1-102011 015 766

## Beschreibung

### TECHNISCHES GEBIET

Die vorliegende Erfindung bezieht sich auf eine Vorrichtung zum Bearbeiten von Werkstücken, die bevorzugt zumindest abschnittsweise aus Holz, Holzwerkstoffen, Kunststoff oder dergleichen bestehen, gemäß dem Oberbegriff von Patentanspruch 1. Ferner bezieht sich die vorliegende Erfindung auf ein Verfahren zum Bearbeiten eines Werkstücks unter Verwendung solch einer Vorrichtung gemäß Patentanspruch 9. Eine solche Vorrichtung und ein solches Verfahren sind vom Dokument EP1657200A1 bekannt.

### STAND DER TECHNIK

Beispielsweise im Bereich der Holz- und Möbelindustrie werden einer Bearbeitungsmaschine Werkstücke mittels einer Zufuhreinheit zugeführt, die gewöhnlich stromaufwärts des Bearbeitungsmaschineneinlaufs angeordnet ist.

Der Anmelderin sind dabei Vorrichtungen mit Zufuhreinheiten bekannt, bei denen die Werkstücke der Bearbeitungsmaschine ohne Anfangsgeschwindigkeit zugeführt werden. In der Bearbeitungsmaschine wird das Werkstück anschließend auf eine Bearbeitungsgeschwindigkeit zur Werkstückbearbeitung beschleunigt. So zeigt beispielsweise die DE 10 2007 028 786 A1 eine Vorrichtung zum Zuführen von Holzplatten zu einer Bearbeitungsmaschine, bei der die Holzplatten von einer Beladestation mittels Linear-Taschenförderern zu einer Entladestation auf der Bearbeitungsmaschine befördert werden. In dieser Vorrichtung werden die Holzplatten an der Entladestation in einem Zustand abgelegt, bei dem der Taschenförderer stillsteht, sodass das abgelegte Werkstück keine Anfangsgeschwindigkeit aufweist.

Derartige Vorrichtungen und Verfahren weisen die Nachteile auf, dass diese einen großen Platzbedarf erfordern und einen geringen Teiledurchsatz aufweisen.

Ferner sind der Anmelderin Vorrichtungen und Verfahren bekannt, bei denen die Zufuhreinheit zum Zuführen von Werkstücken zur Bearbeitungsmaschine durch eine Förderkette mit darauf fest vorgesehenen Nocken ausgebildet ist. Bei diesen Vorrichtungen und Verfahren wird die Förderkette mit einer konstanten Geschwindigkeit angetrieben, sodass die Nocken sich mit einer konstanten Geschwindigkeit bewegen. Kommt ein Werkstück mit den Nocken der Förderkette in Eingriff, so wird dieses impulsartig auf die Kettengeschwindigkeit beschleunigt und anschließend mit einer Anfangsgeschwindigkeit an die Bearbeitungsmaschine übergeben.

Derartige Vorrichtungen und Verfahren weisen jedoch die Nachteile auf, dass diese zu einer Beschädigung der Werkstücke führen und ebenfalls einen geringen Teiledurchsatz aufweisen.

Darüber hinaus bezieht sich die WO 2005/113206 A1 auf ein optimiertes Hobelsystem mit verschiedenen Förder- bzw. Beschleunigungseinrichtungen, welche über ein Steuersystem derart miteinander koordiniert werden, dass eine werkstückspezifische Werkstücklücke zwischen nacheinander zu bearbeitenden Werkstücken herbeiführbar ist.

### DARSTELLUNG DER ERFINDUNG

Es ist daher Aufgabe der vorliegenden Erfindung, eine Vorrichtung und ein Verfahren zum Bearbeiten eines Werkstücks der eingangs genannten Art bereitzustellen, die/das einen hohen Teiledurchsatz bei einer beschädigungsarmen Werkstückbearbeitung ermöglicht.

Der Erfindung liegt der Gedanke zugrunde, dass der große Platzbedarf beziehungsweise geringe Teiledurchsatz der Maschinen im S.d.T. dadurch begründet ist, dass die Werkstücke der Bearbeitungsmaschine ohne Anfangsgeschwindigkeit zugeführt werden und demnach in der Maschine auf die Bearbeitungsgeschwindigkeit beschleunigt werden müssen. Diese Beschleunigung erfordert eine Beschleunigungsstrecke, die wiederum zu einer Vergrößerung der Maschinenabmessung führt. Ferner erhöht sich durch diese Beschleunigungsstrecke und das Abbremsen der Zufuhreinheit zur Werkstückübergabe an die Bearbeitungsmaschine die Gesamtdurchlaufzeit eines Werkstücks durch die Vorrichtung, was sich in hohen Fertigungszeiten und einem geringen Teiledurchsatz wiederspiegelt.

Auch liegt der Erfindung der Gedanke zu Grunde, dass sich die Werkstückbeschädigungen in den Vorrichtungen im S.d.T. vor allem dadurch begründen, dass die Werkstücke impulsartig aus dem Stillstand mittels der Nocken der Förderkette auf die Fördergeschwindigkeit der Förderkette beschleunigt werden. Dieses "ungebremste Aufschlagen" der Nocken auf das Werkstück ist wiederum in der konstanten Kettengeschwindigkeit der Zufuhreinheit begründet. Darüber hinaus führt das feste Vorsehen der Nocken auf der Förderkette zu einer vordefinierten Taktleistung der Zufuhreinheit, die nicht an die zu bearbeitenden Werkstücke anpassbar ist. Das Resultat ist auch hier ein geringer Teiledurchsatz.

Erfindungsgemäß wird daher eine Vorrichtung bereitgestellt, die zum Bearbeiten von Werkstücken, welche zumindest abschnittsweise aus Holz, Holzwerkstoffen, Kunststoff oder dergleichen bestehen, geeignet ist, wobei die Vorrichtung eine Bearbeitungseinheit zum Bearbeiten der Werkstücke, eine Fördereinheit zum Bewegen der Werkstücke in Bezug auf die Bearbeitungseinheit mit einer Fördergeschwindigkeit, und eine Zufuhreinheit zum Zuführen der Werkstücke zu der Fördereinheit aufweist. Dabei umfasst die Zufuhreinheit mindestens ein Zufuhrelement, welches eingerichtet ist, die Werkstücke der Fördereinheit mit einer Zufuhrgeschwindigkeit zuzuführen. Die Zufuhrgeschwindigkeit wird erfindungsgemäß als die Geschwindigkeit verstanden, mit der das Werkstück von der Zufuhreinheit an die Fördereinheit übergeben wird. Gekennzeichnet ist die erfindungsgemäße Vorrichtung dadurch, dass die Zufuhrgeschwindigkeit und/oder die Beschleunigung des Zufuhrelements auf die Zufuhrgeschwindigkeit variabel einstellbar ist. Die Einstellbarkeit der Zufuhrgeschwindigkeit ist erfindungsgemäß derart zu verstehen, dass die Geschwindigkeit des Zufuhrelements derart veränderbar ist, dass die Werkstückgeschwindigkeit bei Übergabe an die Fördereinheit veränderbar ist. Die Einstellbarkeit der Beschleunigung auf die Zufuhrgeschwindigkeit bezieht sich erfindungsgemäß auf die mögliche Einstellbarkeit der Beschleunigungskurve des Zufuhrelements auf die Zufuhrgeschwindigkeit. So kann beispielsweise das Werkstück konstant auf eine Zuführgeschwindigkeit beschleunigt werden. Ebenso ist es jedoch auch denkbar, die Beschleunigung von einem geringen Wert bis zum Erreichen der Zuführgeschwindigkeit ansteigen zu lassen. Hier ist es auch vorstellbar, dass das Werkstück gar nicht beschleunigt und durch die Zuführeinheit mit einer konstanten Geschwindigkeit befördert wird. Dabei ist es ferner denkbar, dass die Zufuhreinheit eingerichtet ist, die Zufuhrgeschwindigkeit und/oder die Beschleunigung auf die Zufuhrgeschwindigkeit während des Bewegens eines Werkstücks auf der Zufuhreinheit zu verändern.

Die erfindungsgemäße Vorrichtung führt zu den Vorteilen, dass durch die variable Einstellbarkeit der Zufuhrgeschwindigkeit und/oder der Beschleunigung auf die Zufuhrgeschwindigkeit eine Relativgeschwindigkeit zwischen Zufuhrelement und Werkstück beim Aufnehmen des Werkstücks durch die Zufuhreinheit individuell an das aufzunehmende Werkstück anpassbar ist. Dementsprechend kann das Auftreffen des Zufuhrelements auf das Werkstücks an die Werkstückbeschaffenheit, zum Beispiel das Material und/oder die Werkstückoberfläche, angepasst werden, um so eine Werkstückbeschädigung zu unterbinden beziehungsweise zu minimieren. Ferner wird durch die Möglichkeit der Beschleunigung der Werkstücke durch die Zufuhreinheit und der Übergabe an die Fördereinheit mit einer Anfangsgeschwindigkeit eine erforderliche Beschleunigungsstrecke auf der Fördereinheit minimiert oder ist sogar überflüssig. Dies resultiert in relativ geringen Maschinenabmessungen und einem erhöhten Teiledurchsatz. Darüber hinaus kann durch die Anpassbarkeit der Zufuhrgeschwindigkeit und/oder der Beschleunigung auf die Zufuhrgeschwindigkeit die Taktleistung der Vorrichtung an die zu bearbeitenden Werkstücke angepasst werden. Demnach kann insbesondere bei der Bearbeitung von Werkstücken mit unterschiedlichen Abmessungen der Teiledurchsatz signifikant erhöht werden. Dies resultiert in geringeren Fertigungs- und demnach Stückkosten. So ist es durch die erfindungsgemäße Ausgestaltung möglich, dass sich das Zufuhrelement bzw. die Zufuhreinheit an dem Teilefluss orientiert und somit keinen Flaschenhals in der Bearbeitungskette darstellt.

Ferner weist die Zufuhreinheit dabei eine Mehrzahl von Zufuhrelementen auf, die eingerichtet sind, die Werkstücke der Fördereinheit mit einer Zufuhrgeschwindigkeit zuzuführen. Diese Ausgestaltung führt zu dem Vorteil, dass eine weitere Erhöhung der Maschinentaktung und demnach des Teiledurchsatzes bereitgestellt werden kann. Dies liegt darin begründet, dass das Vorsehen von einer Mehrzahl von Zufuhrelementen eine gleichzeitige Zufuhr von mehreren Werkstücken ermöglicht. Demnach führt diese Ausgestaltung zu einer weiteren Verringerung der Fertigungskosten und geringeren Stückkosten.

Dabei kann mindestens eines der Zufuhrelemente eingerichtet sein, die Werkstücke auf die Fördergeschwindigkeit der Fördereinheit zu beschleunigen. In dieser bevorzugten Ausgestaltung wird das Werkstück von der Zufuhreinheit an die Fördereinheit ohne Relativgeschwindigkeit übergeben, sodass das Werkstück bereits die Fördergeschwindigkeit der Fördereinheit bei Übergabe aufweist. Demnach muss auf der Fördereinheit keine Beschleunigungsstrecke bereitgestellt werden, was wiederum in einer besonders kompakten und kostengünstigen Maschine resultiert. Hier können auch alle Zufuhrelemente eingerichtet sein, die Werkstücke auf die Fördergeschwindigkeit der Fördereinheit zu beschleunigen.

Erfindungsgemäß ist dabei die Zufuhrgeschwindigkeit und/oder die Beschleunigung auf die Zufuhrgeschwindigkeit eines oder mehrerer, bevorzugt aller, Zufuhrelemente unabhängig von der Zufuhrgeschwindigkeit anderer Zufuhrelemente der Zufuhreinheit einstellbar. Dies führt zu dem Vorteil, dass die Zufuhrgeschwindigkeit und/oder die Beschleunigung auf die Zufuhrgeschwindigkeit der Zufuhrelemente individuell an das jeweils zuzuführende bzw. zu bearbeitende Werkstück anpassbar ist. Demnach weist die Erfindung eine besonders hohe Variabilität auf, die in einer Vorrichtung mit einem hohen Teiledurchsatz, geringen Fertigungs- und Stückkosten resultiert. Insbesondere lässt sich so auch eine Werkstücklücke zwischen den Werkstücken minimieren, was wiederum den Teiledurchsatz der Vorrichtung erhöht.

Ferner weist erfindungsgemäß die Zufuhreinheit mindestens eine umlaufende Förderbahn auf, auf der die Mehrzahl von Zufuhrelementen umlaufend und unabhängig voneinander verfahrbar ist. Die Erfindung führt zu einer besonders kostengünstigen Vorrichtung. Ferner ist durch die umlaufende Förderbahn eine einfache Zurückführung der Zufuhrelemente von Zufuhreinheitsauslauf zu Zufuhreinheitseinlauf möglich. Dementsprechend weist diese Ausgestaltung auch eine geringe Komplexität auf. Durch die unabhängig voneinander vorgesehene Verfahrbarkeit wird ferner eine hohe Variabilität bereitgestellt, die zu den bereits zuvor ausgeführten Vorteilen der werkstückspezifischen Zufuhrgeschwindigkeit beziehungsweise Beschleunigung auf die Zufuhrgeschwindigkeit führt. Auch ist mit der Erfindung eine Werkstücklücke minimierbar, sodass ein hoher Teiledurchsatz bereitgestellt werden kann.

Auch kann die Zufuhreinheit mindestens einen Antrieb, bevorzugt zwei oder mehr Antriebe, aufweisen, der/die bevorzugt ausgewählt sind aus Linearmotor, Servo-Antrieb und/oder rotativer Servo-Antrieb über insbesondere Zahnriemen und/oder Ritzel-Zahnstange-Mechanismus. Durch den eigenen Antrieb der Zufuhreinheit ist deren Antrieb von dem Antrieb anderer Einheiten entkoppelbar, was eine erhöhte Variabilität bereitstellt und die zuvor ausgeführte werkstückspezifische Zufuhr ermöglicht.

Gemäß der Erfindung weist eine Mehrzahl von Zufuhrelementen, bevorzugt alle, jeweils einen separaten Antrieb auf, wobei die Zufuhrelemente bevorzugt unabhängig voneinander verfahrbar sind. Dies führt zu dem Vorteil, dass der Antrieb der Zufuhrelemente jeweils unabhängig von dem der weiteren Zufuhrelemente erfolgen kann. Dies wiederum ermöglicht auf wenig komplexe Weise das individuelle Einstellen der Zufuhrgeschwindigkeit und/oder Beschleunigung auf die Zufuhrgeschwindigkeit der Zufuhrelemente. Wie zuvor bereits ausgeführt, ermöglicht dies einen erhöhten Teiledurchsatz und führt zu geringen Fertigungsbeziehungsweise Stückkosten.

Ebenso ist es denkbar, dass die Zufuhreinheit mindestens ein Paar oder eine Gruppe von Zufuhrelementen aufweist, die auf unterschiedlichen Förderbahnen laufen und miteinander synchronisiert sind. Diese bevorzugte Ausgestaltung ermöglicht eine winkelgenaue Werkstückzuführung zu der Fördereinheit beziehungsweise Bearbeitungseinheit. Dies liegt darin begründet, dass mittels dieser bevorzugten Ausgestaltung die Werkstücke durch zwei beabstandet zueinander angeordneten Zufuhrelemente erfasst werden und demnach in der Lage bestimmt ist.

Hier ist es auch denkbar, dass zumindest einige der miteinander synchronisierten Zufuhrelemente miteinander durch eine Förderschiene verbundene sind. Mit dieser Ausgestaltung wird die Werkstückförderung auch ohne Kontakt zwischen Zufuhrelement und Werkstück ermöglicht. Demnach wird so eine erhöhte Anordnungsvariabilität der Zufuhrelemente bereitgestellt, was zu einem weniger komplexen Maschinenaufbau und damit geringeren Systemkosten führt. Diese Ausgestaltung ermöglicht dabei ebenfalls eine winkelgenaue Werkstückzuführung zu der Förderbeziehungsweise Bearbeitungseinheit.

Dabei sind die Zufuhrelemente bevorzugt ausgewählt aus Klinken, Noppen, Greifern und Saugern. Durch diese Ausgestaltung wird eine besonders kostengünstige und wenig komplexe Vorrichtung bereitgestellt.

In einer weiteren Zielrichtung bezieht sich die vorliegende Erfindung auf ein Verfahren zum Bearbeiten von Werkstücken unter Einsatz einer Vorrichtung nach einem der vorhergehenden Ansprüche. Dabei umfasst das Verfahren das Fördern der Werkstücke mittels der Zufuhreinheit zunächst mit einer Geschwindigkeit, die geringer als die Fördergeschwindigkeit der Fördereinheit ist. Hier sei darauf hingewiesen, dass die Zufuhreinheit die Werkstücke auch im Stillstand, das heißt mit der Geschwindigkeit Null, aufnehmen kann. Ferner umfasst das Verfahren das Beschleunigen der Werkstücke auf eine Zufuhrgeschwindigkeit mittels der Zufuhreinheit, die der Fördergeschwindigkeit der Fördereinheit im Wesentlichen entspricht. Bevorzugt entspricht die Zufuhrgeschwindigkeit der Fördergeschwindigkeit. Ferner umfasst das Verfahren das Übergeben der Werkstücke von der Zufuhreinheit an die Fördereinheit, und das Bearbeiten der Werkstücke mittels der Bearbeitungseinheit. Bevorzugt werden diese Verfahrensschritte dabei in dieser Reihenfolge ausgeführt. Hinsichtlich der Vorteile dieses Verfahrens wird auf die Vorteile der entsprechenden zuvor beschriebenen Vorrichtung verwiesen.

### KURZE BESCHREIBUNG DER ZEICHNUNGEN

Fig. 1 zeigt eine perspektivische Ansicht einer ersten Ausführungsform der vorliegenden Erfindung.
Fig. 2 zeigt eine perspektivische Ansicht einer zweiten Ausführungsform der vorliegenden Erfindung.

### DETAILLIERTE BESCHREIBUNG BEVORZUGTER AUSFÜHRUNGSFORMEN

Im Folgenden werden bevorzugte Ausführungsformen der vorliegenden Erfindung unter Bezugnahme auf die begleitenden Zeichnungen beschrieben. Einzelne und mehrere Merkmale der verschiedenen Ausführungsformen können untereinander kombiniert werden, um neue Ausführungsformen auszubilden. Auch können die Ausführungsformen jeweils untereinander kombiniert werden, um weitere Ausführungsformen auszubilden.

Die im Folgenden beschriebenen Ausführungsformen eignen sich bevorzugt zum Bearbeiten von Werkstücken, die zumindest abschnittsweise aus Holz, Holzwerkstoffen, Kunststoff oder dergleichen ausgebildet sind, wie sie beispielsweise im Bereich der Möbel- und Bauelementeindustrie zum Einsatz kommen. Dabei kann es sich beispielsweise um Massivholz- oder Spanplatten, Leichtbauplatten, Sandwichplatten oder dergleichen handeln. Es sei jedoch darauf hingewiesen, dass die Ausführungsformen nicht auf die Bearbeitung derartiger Materialien und Werkstücke beschränkt sind.

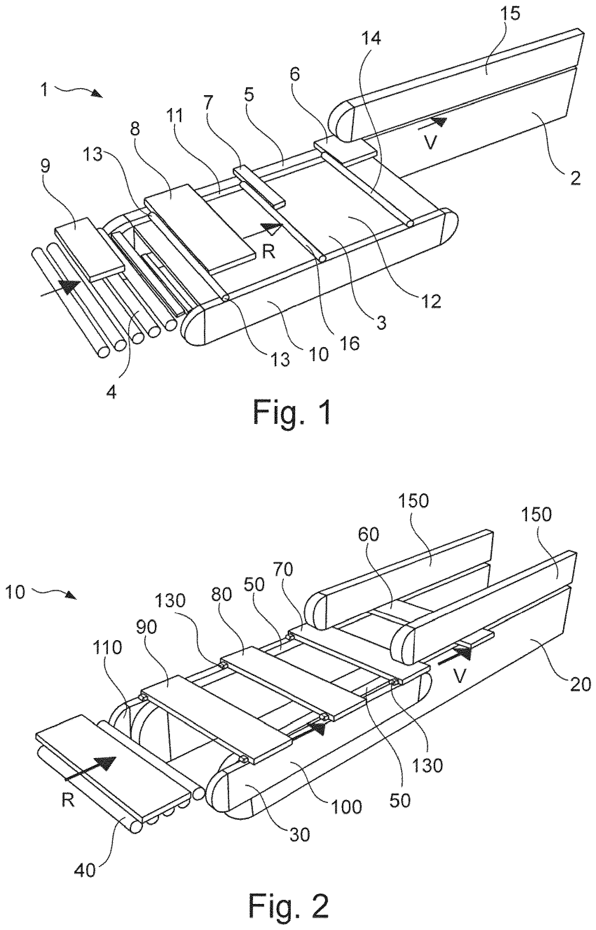

Fig. 1 zeigt eine perspektivische Ansicht einer ersten bevorzugten Ausführungsform der vorliegenden Erfindung. Die Vorrichtung 1 weist eine nicht gezeigte Bearbeitungseinheit, eine Fördereinheit 2 zum Bewegen der Werkstücke in Bezug auf die nicht gezeigte Bearbeitungseinheit mit einer Fördergeschwindigkeit V, eine Zufuhreinheit 3 und einen Werkstückeinlauf 4 auf.

Die nicht gezeigte Bearbeitungseinheit ist derart angeordnet, dass ein Werkstück mittels der Fördereinheit 2 relativ zu der Bearbeitungseinheit zur Bearbeitung des Werkstücks bewegbar ist. Die Bearbeitungseinheit kann eine Formatbearbeitungsmaschine, eine Kantenanleimmaschine oder eine Kombination beider sein. Hier sei darauf hingewiesen, dass auch andere Arten von Bearbeitungseinheiten denkbar sind.

Die Fördereinheit 2 ist in dieser bevorzugten Ausführungsform in Form eines umlaufenden Förderbandes 5 und demnach als Endlosumlaufelement ausgebildet. Hier sei darauf hingewiesen, dass auch andere Fördereinheiten denkbar sind. So kann die Fördereinheit beispielsweise als Kette oder Schlitten ausgebildet sein. Das Förderband 5 weist dabei bevorzugt eine Oberfläche auf, die eine hohe Reibkraft zwischen einem Werkstück 6, 7, 8, 9 ermöglicht. Beispielsweise kann das Förderband 5 aus Gummi oder einem sonstigen Material mit einem hohen Reibungskoeffizienten ausgebildet sein. Ebenso ist es denkbar, dass auf der Oberfläche des Förderbandes 5 Noppen oder andere Ausgestaltungen vorgesehen sind, um die Reibung zwischen dem Förderband 5 und einem darauf liegenden Werkstück 6, 7, 8, 9 zu erhöhen. Die Fördereinheit 2 beziehungsweise das Förderband 5 weist bevorzugt eine Breite auf, die geringer als die Breite der zu bearbeitenden Werkstücke ist.

Darüber hinaus umfasst die Vorrichtung 1 eine Zufuhreinheit 3. In dieser ersten bevorzugten Ausführungsform ist diese bevorzugt aus zwei umlaufenden Förderbahnen 10 und 11 ausgestaltet, die identisch zueinander ausgebildet sind. Die Förderbahnen 10 und 11 sind beabstandet parallel zueinander angeordnet. Zwischen den umlaufenden Förderbahnen 10 und 11 ist in dieser ersten bevorzugten Ausführungsform eine Werkstückauflage 12 vorgesehen, die sich von einer Seitenfläche der Bahn 10 zu einer Seitenfläche der Bahn 11 erstreckt. Dabei ist die Werkstückauflage 12 bevorzugt in so einer Höhe vorgesehen, dass diese im Wesentlichen plan mit den Oberseiten der Bahnen 10 und 11 abschließt. An den umlaufenden Förderbahnen 10 und 11 sind jeweils mehrere Zufuhrelemente, hier sogenannte Nockenschienenaufnahmen 13, vorgesehen. In dieser bevorzugten Ausführungsform weist jede der Förderbahnen 10 und 11 jeweils fünf solcher Nockenschienenaufnahmen 13 auf. Selbstverständlich ist die vorliegende Ausführungsform nicht auf diese Anzahl von Nockenschienenaufnahmen beschränkt. Eine Nockenschienenaufnahme 13 der ersten Bahn 10 ist jeweils mit einer Nockenschienenaufnahme 13 der zweiten Bahn 11 über eine Nockenschiene 14, 16 verbunden. Dabei sind diese zwei Nockenschienenaufnahmen 13, die mit einer Nockenschiene 14, 16 verbunden sind, auf den jeweiligen Bahnen 10 und 11 jeweils so zueinander angeordnet, dass diese sich in einer Werkstückförderrichtung R an gleicher Förderposition befinden und damit die Nockenschienen 14, 16 senkrecht zur Werkstückförderrichtung R und parallel zur Breitenerstreckungsrichtung der Zufuhreinheit 3 angeordnet sind. Die Nockenschienen 14, 16 sind dabei bevorzugt aus einem leichten Material ausgebildet und können Vorkehrungen an deren Stirnseite aufweisen, die einen "sanften" Eingriff mit den Werkstücken ermöglichen. Ein derartiger "sanfter" Eingriff kann beispielsweise durch Pufferelemente zum Dämpfen eines impulsartigen Auftreffens von Werkstück auf Nockenschiene realisiert werden. Hier sind selbstverständlich auch andere Ausgestaltungen denkbar.

Die Zufuhreinheit 3 dieser ersten bevorzugten Ausgestaltung ist dabei so ausgebildet, dass die einzelnen Nockenschienenaufnahmen 13 der Förderbahnen 10 und 11 jeweils in Paaren, das heißt eine Aufnahme 13 der ersten Bahn 10 ist gepaart mit einer Aufnahme 13 der zweiten Bahn 11, bewegbar und bevorzugt antreibbar sind. Dabei sind die einzelnen Paare von Nockenschienenaufnahmen 13 jeweils unabhängig von den anderen Paaren bewegbar und bevorzugt antreibbar. Ein derartiger Antrieb kann beispielsweise elektromagnetisch und/oder elektrisch und/oder mechanisch erfolgen. Hier ist beispielsweise ein Servo-Antrieb und/oder ein rotativer Servo-Antrieb über Zahnriemen und/oder Ritzel-Zahnstangenmechanismus denkbar. Ebenso kann dieser Antrieb mittels elektromagnetischen Feldern und/oder Dauermagneten erfolgen. Dementsprechend ist die Vorrichtung 1 der ersten bevorzugten Ausführungsform derart ausgestaltet, dass die einzelnen Nockenschienen 14, 16 unabhängig voneinander auf den umlaufenden Förderbahnen 10 und 11 bewegbar und unabhängig voneinander auf diesen antreibbar sind.

Ferner weist die Vorrichtung 1 dieser ersten bevorzugten Ausführungsform einen Werkstückeinlauf 4 auf, der in Förderrichtung R stromaufwärts der Zufuhreinrichtung 3 angeordnet ist. Der Werkstückeinlauf 4 ist in dieser bevorzugten Ausführungsform bevorzugt in Form von Förderrollen ausgebildet. Dabei ist der Einlauf 4 derart ausgestaltet und angeordnet, dass dieser Werkstücke 6, 7, 8, 9 der Werkstückauflage 12 der Zufuhreinrichtung 3 zuführen kann. Selbstverständlich sind hier auch andere Ausgestaltungen des Werkstückeinlaufs 4 denkbar. Beispielsweise kann dieser in Form eines Förderbandes oder in Form von Greifzangen ausgebildet sein.

Darüber hinaus weist die Vorrichtung 1 eine Andrückeinheit 15 auf, die oberhalb und in Förderrichtung R im hinteren Teil der Fördereinheit 2 angeordnet ist. Mittels der Andrückeinheit 15 ist ein Werkstück 6, 7, 8, 9 an das Förderband 5 der Fördereinheit 2 anrückbar. Die Andrückeinheit 15 kann beispielsweise in Form eines umlaufenden Förderbands ausgestaltet sein, wobei die Förderbandführung in Höhenrichtung zum Anlegen eines Drucks an ein Werkstück verstellbar ist.

Die Zufuhreinheit 3 dieser ersten bevorzugten Ausführungsform ist seitlich und angrenzend an die Fördereinheit 2 derart angeordnet, dass die Werkstückauflage 12 im Wesentlichen plan mit der Oberseite, das heißt mit dem Förderband 5, der Fördereinheit 2 abschließt. Dabei ist die Zufuhreinheit 3 in Zufuhrrichtung R bevorzugt im vorderen Bereich der Fördereinheit 2 angeordnet. Die Andrückeinheit 15 dieser bevorzugten Ausführungsform ist bevorzugt über der Fördereinheit 2 in Förderrichtung R hinter der Zufuhreinheit 3 angeordnet. Der Werkstückeinlauf 4 ist in Förderrichtung R stromaufwärts der Zufuhreinheit 3 angeordnet. Die Vorrichtung 1 ist nicht auf eine derartige Anordnung und Ausgestaltung beschränkt.

Darüber hinaus weist die erste bevorzugte Ausführungsform eine Steuereinheit auf, die eingerichtet ist, zumindest einen der im Folgenden beschriebenen Verfahrensschritte auszuführen. Die Steuereinheit kann auch eingerichtet sein mehrere oder alle dieser Schritte auszuführen. Mittels des Werkstückeinlaufs 4 werden Werkstücke 6, 7, 8, 9 der Zufuhreinheit 3 mit konstanter Geschwindigkeit nacheinander zugeführt. Ein erstes Werkstück 6 wird über die Förderrollen des Werkstückeinlaufs 4 auf der Werkstückauflage 12 der Zufuhreinheit 3 abgelegt. Anschließend wird eine Nockenschiene 14 durch synchrones Zuführen der anliegenden Nockenschienenaufnahmen 13 auf den umlaufenden Förderbahnen 10 und 11 derart in Förderrichtung R dem Werkstück 6 in Förderrichtung R von hinten zugeführt, dass diese das Werkstück 6 in Förderrichtung R mitnimmt. Die Geschwindigkeit der Nockenschiene 14, mit welcher diese dem auf der Werkstückauflage 12 liegenden Werkstück 6 zugeführt wird, wird dabei an spezifische Eigenschaften des Werkstücks angepasst. So kann diese für besonders empfindliche Werkstücke beziehungsweise Werkstückoberflächen relativ gering und für schwer beschädigbare Werkstücke relativ hoch gewählt werden. In dieser bevorzugten Ausführungsform wird die Nockenschiene 14 und damit das Werkstück 6 nach Eingriff mit dem Werkstück 6 auf die Fördergeschwindigkeit V des Förderbandes 5 der Fördereinheit 2 beschleunigt. Die Beschleunigung wird dabei so gewählt, dass das Werkstück 6 und die Nockenschiene 14 an dem Ort, wo das Werkstück 6 in den Eingriffsbereich der Andrückeinheit 15 gerät, die Fördergeschwindigkeit V der Fördereinheit 2 aufweist. An diesem Ort wird das Werkstück 6 mittels der Andrückeinheit 15 an das Förderband 5 der Fördereinheit 2 angedrückt und gerät damit mit dieser in den Eingriff. Durch die Fördereinheit 2 wird das Werkstück 6 mit der Fördergeschwindigkeit V entlang des nicht gezeigten Bearbeitungswerkzeugs zur Bearbeitung des Werkstücks 6 geführt.

Während dieses Vorgangs wurde der Werkzeugablage 12 der Zufuhreinheit 3 bereits ein nächstes Werkstück 7 zugeführt, welches mit einer weiteren Nockenschiene 16 der Zufuhreinheit 3 mitgenommen wurde. Die Geschwindigkeit der Nockenschiene 16 zu dem Werkstück 7 wurde dabei wieder an das zu bearbeitende Werkstücks 7 angepasst. Ebenfalls wurde der Zuführzeitpunkt der Schiene 16 zu dem Werkstück 7 an die Besonderheiten des Werkstücks 7, genauer gesagt die Werkstückgröße, angepasst, sodass eine möglichst geringe Werkstücklücke zwischen den Werkstücken 6 und 7 entsteht und damit der Durchsatz der Vorrichtung 1 maximiert wird. Das Werkstück 7 wird durch die Nockenschiene 16 analog zu dem Werkstück 6 ebenfalls auf die Fördergeschwindigkeit V der Fördereinheit 2 beschleunigt. Analog wie das Werkstück 6 wird das Werkstück 7 ebenfalls im Eingriffsbereich der Andrückeinheit 15 durch diese an das Förderband 5 der Fördereinheit 2 angedrückt und mittels der Fördereinheit 2 an dem nicht gezeigten Bearbeitungswerkzeug der Bearbeitungseinheit zur Bearbeitung des Werkstücks 7 vorbeigeführt. Dieser Verfahrensablauf wird analog für die Werkstücke 8 und 9 wiederholt.

Fig. 2 zeigt eine zweite bevorzugte Ausführungsform der vorliegenden Erfindung. In dieser zweiten bevorzugten Ausführungsform werden gleiche Bauteile wie jene in der zuvor beschriebenen ersten bevorzugten Ausführungsform mit der Bezugszeichennummer der ersten Ausführungsform multipliziert mit zehn gekennzeichnet. Für die Ausgestaltungsmöglichkeiten dieser Bauteile und Einheiten wird auf die Ausführungen der ersten bevorzugten Ausführungsform verwiesen. Die folgende Beschreibung konzentriert sich demnach im Wesentlichen auf die Unterschiede der zweiten bevorzugten Ausführungsform zu der ersten bevorzugten Ausführungsform.

Die Vorrichtung 10 der zweiten bevorzugten Ausführungsform weist einen Werkstückeinlauf 40, eine Zufuhreinheit 30, eine Fördereinheit 20 und eine Andrückeinheit 150 auf.

Für die Ausgestaltung des Werkstückeinlaufs 40 wird auf die Ausführung im Rahmen der ersten bevorzugten Ausführungsform verwiesen.

Die Zufuhreinheit 30 unterscheidet sich von der Ausgestaltung der ersten bevorzugten Ausführungsform im Wesentlichen dadurch, dass diese keine Werkstückauflage 12 und keine Nockenschienen 14, 16 aufweist. Anstatt der Nockenschienen 14, 16 bzw. Nockenschienenaufnahmen 13 umfasst die Zufuhreinheit 30 der zweiten bevorzugten Ausführungsform Nocken 130, die zum Mitnehmen eines Werkstücks 60, 70, 80, 90 ausgebildet sind. Die Zufuhreinheit 30 dieser zweiten bevorzugten Ausführungsform weist ebenfalls zwei umlaufende Förderbahnen 100 und 110 auf, die analog zu jenen der ersten Ausführungsform ausgestaltet sein können. In dieser zweiten bevorzugten Ausführungsform weist jede der Bahnen 100 und 110 jeweils fünf solcher Nocken 130 auf. Selbstverständlich ist die vorliegende Ausführungsform nicht auf diese Anzahl von Nocken beschränkt. Ein Nocken 130 der ersten Bahn 100 ist jeweils mit einem Nocken 130 der zweiten Bahn 110 synchronisiert, sodass sich die Nocken 130 in einer Werkstückförderrichtung R an gleicher Förderposition befinden. Die Nocken 130 sind dabei jeweils in Paaren, analog zu den Nockenschienenaufnahmen 13 der ersten Ausführungsform, bewegbar und bevorzugt antreibbar. Für den Antrieb der Nocken 130 wird auf die Möglichkeiten der Antriebsausgestaltung der Nockenschienenaufnahmen 13 der ersten Ausführungsform verwiesen.

Ferner umfasst die Vorrichtung 10 eine Fördereinheit 20, die aus zwei Förderbänder 50, wie sie im Rahmen der ersten Ausführungsform beschrieben wurden, ausgestaltet ist. Die einzelnen Förderbänder 50 der Fördereinheit 20 dieser zweiten bevorzugten Ausführungsform sind dabei jeweils innerhalb und seitlich der umlaufenden Bahnen 100 und 110 der Zufuhreinheit 30 derart angeordnet, dass die Oberseiten der Förderbänder 50 der Fördereinheit 20 im Wesentlichen plan mit den Oberseiten der umlaufenden Bahnen 100 und 110 abschließen. Die Nocken 130 stehen dabei jeweils in Bezug auf die Förderbänder 50 der Fördereinheit 20 in Höhenrichtung hervor.

In Förderrichtung R der Werkstücke 60, 70, 80, 90 ist die Zufuhreinheit 30 im vorderen Bereich der Fördereinheit 20 angeordnet. Im hinteren Bereich in Förderrichtung R der Werkstücke weist die Vorrichtung 10 eine Andrückeinheit auf, die im Wesentlichen aus zwei Andrückeinheiten 150, wie sie im Rahmen der ersten bevorzugten Ausführungsform beschrieben wurden, ausgebildet ist. Die Andrückeinheiten 150 sind dabei jeweils oberhalb der Förderbänder 50 der Fördereinheit 20 zum Andrücken eines Werkstücks 60, 70, 80, 90 an die Förderbänder 50 der Fördereinheit 20 angeordnet.

Ferner weist die Vorrichtung 10 eine Steuereinheit auf, die eingerichtet ist, zumindest einige der im Folgenden beschriebenen Schritte auszuführen. Die Steuereinheit kann auch eingerichtet sein mehrere oder alle dieser Schritte auszuführen. Mittels des Werkstückeinlaufs 40 werden der Zufuhreinheit 30 Werkstücke 60, 70, 80, 90 zugeführt. Die Werkstücke werden dabei durch die umlaufenden Förderbahnen 100 und 110 aufgenommen. Anschließend wird ein Nockenpaar 130, das heißt ein Nocken auf der umlaufenen Bahn 100 und ein mit diesem synchronisierter Nocken 130 auf der umlaufenden Bahn 110, dem auf den umlaufenden Bahnen 100 und 110 abgelegten Werkstück 60 derart zugeführt, dass das Werkstück durch dieses Nockenpaar 130 in Förderrichtung R mitgenommen wird. Analog zu der ersten bevorzugten Ausführungsform wird die Geschwindigkeit beim Zuführen des Nockenpaars 130 zu dem Werkstück an das spezifische Werkstück angepasst, um so einen möglichst "sanften" Eingriff zu ermöglichen und/oder eine Werkstücklücke zwischen benachbarten Werkstücken zur Durchsatzerhöhung zu minimieren. Ferner wird das Werkstück 60 durch das Nockenpaar 130 auf die Geschwindigkeit V der Fördereinheit 20 derart beschleunigt, dass das Werkstück 60 im Eingriffsbereich der Andrückeinheit 150 diese Fördergeschwindigkeit V aufweist. Sobald das Werkstück 60 in den Eingriffsbereich der Andrückeinheit 150 gelangt, wird dieses durch die Andrückeinheit 150 an die Förderbänder 50 der Fördereinheit 20 angedrückt und mittels dieser entlang von einer oder zwei nicht gezeigten Bearbeitungseinheiten zur Bearbeitung des Werkstücks geführt. Bevorzugt sind diese Bearbeitungseinheiten dabei jeweils an einer Seite der Fördereinheit 20 angeordnet. Dieser Verfahrensablauf wird für die Werkstücke 70, 80, 90 analog wiederholt.

## Patentansprüche

1. Vorrichtung (1; 10) zum Bearbeiten von Werkstücken (6; 60), die bevorzugt zumindest abschnittsweise aus Holz, Holzwerkstoffen, Kunststoff oder dergleichen bestehen, mit:
einer Bearbeitungseinheit zum Bearbeiten der Werkstücke (6; 60),
einer Fördereinheit (2; 20) zum Bewegen der Werkstücke (6; 60) in Bezug auf die Bearbeitungseinheit mit einer Fördergeschwindigkeit (V), und
einer Zufuhreinheit (3; 30) zum Zuführen der Werkstücke (6; 60) zu der Fördereinheit (2; 20), wobei die Zufuhreinheit (3; 30) mindestens ein Zufuhrelement (13; 130) aufweist, das eingerichtet ist, die Werkstücke (6; 60) der Fördereinheit (2; 20) mit einer Zufuhrgeschwindigkeit zuzuführen,
wobei
die Zufuhrgeschwindigkeit und/oder die Beschleunigung des Zufuhrelements (13; 130) auf die Zufuhrgeschwindigkeit variabel einstellbar ist, und
die Zufuhreinheit (3; 30) eine Mehrzahl von Zufuhrelementen (13; 130) aufweist, die eingerichtet sind, die Werkstücke (6; 60) der Fördereinheit (2; 20) mit einer Zufuhrgeschwindigkeit zuzuführen, wobei die Zufuhreinheit (3; 30) mindestens eine umlaufende Förderbahn (10, 11; 100, 110) aufweist, auf der die Mehrzahl von Zufuhrelementen (13; 130) umlaufend verfahrbar ist,
**dadurch gekennzeichnet, dass**
die Zufuhrgeschwindigkeit und/oder die Beschleunigung auf die Zufuhrgeschwindigkeit eines oder mehrerer Zufuhrelemente (13; 130) unabhängig von der Zufuhrgeschwindigkeit anderer Zufuhrelemente (13; 130) der Zufuhreinheit (3; 30) einstellbar ist.

2. Vorrichtung (1; 10) nach Anspruch 1, **dadurch gekennzeichnet, dass** mindestens ein Zufuhrelement (13; 130) eingerichtet ist, die Werkstücke (6; 60) auf die Fördergeschwindigkeit (V) der Fördereinheit (2; 20) zu beschleunigen.

3. Vorrichtung (1; 10) nach einem der vorhergehenden Ansprüche, **dadurch gekennzeichnet, dass** die Mehrzahl von Zufuhrelementen (13; 130) unabhängig voneinander verfahrbar ist.

4. Vorrichtung (1; 10) nach einem der vorhergehenden Ansprüche, **dadurch gekennzeichnet, dass** die Zufuhreinheit (3; 30) mindestens einen Antrieb, bevorzugt zwei oder mehr Antriebe aufweist, die bevorzugt ausgewählt sind aus Linearmotor, Servo-Antrieb und/oder rotativer Servo-Antrieb über insbesondere Zahnriemen und/oder Ritzel-Zahnstange-Mechanismus.

5. Vorrichtung (1; 10) nach Anspruch 4, **dadurch gekennzeichnet, dass** eine Mehrzahl von Zufuhrelementen (13; 130) jeweils einen separater Antrieb aufweist, wobei die Zufuhrelemente (13; 130) bevorzugt unabhängig voneinander verfahrbar sind.

6. Vorrichtung (1; 10) nach einem der vorhergehenden Ansprüche, **dadurch gekennzeichnet, dass** die Zufuhreinheit (3; 30) mindestens ein Paar oder eine Gruppe von Zufuhrelementen aufweist, die auf unterschiedlichen Förderbahnen (10, 11; 100, 110) laufen und miteinander synchronisiert sind.

7. Vorrichtung (1) nach Anspruch 6, **dadurch gekennzeichnet, dass** zumindest einige der miteinander synchronisierten Zufuhrelementen (13) miteinander durch eine Förderschiene (14, 16) verbunden sind.

8. Vorrichtung (1; 10) nach einem der vorhergehenden Ansprüche, **dadurch gekennzeichnet, dass** die Zufuhrelemente (13; 130) ausgewählt sind aus Klinken, Nocken, Greifern, Saugern.

9. Verfahren zum Bearbeiten von Werkstücken (6; 60) unter Einsatz einer Vorrichtung (1; 10) nach einem der vorhergehenden Ansprüche, mit den Schritten:
Fördern der Werkstücke (6; 60) mittels der Zufuhreinheit (3; 30) zunächst mit einer Geschwindigkeit, die geringer ist als die Fördergeschwindigkeit (V) der Fördereinheit (2; 20),
Beschleunigen der Werkstücke (6; 60) auf eine Zufuhrgeschwindigkeit mittels der Zufuhreinheit (3; 30), die der Fördergeschwindigkeit (V) der Fördereinheit (2; 20) im Wesentlichen entspricht,
Übergabe der Werkstücke (6; 60) von der Zufuhreinheit (3; 30) an die Fördereinheit (2; 20), und
Bearbeiten der Werkstücke (6; 60) mittels der Bearbeitungseinheit.

10. Verfahren nach Anspruch 9, **dadurch gekennzeichnet, dass** die Verfahrensschritte in dieser Reihenfolge ausgeführt werden.

## Claims

1. Device (1; 10) for processing workpieces (6;60) which preferably consist at least partially of wood, wood-based materials, plastic or the like, with:
a processing unit for processing the workpieces (6; 60),
a conveyor unit (2; 20) for moving the workpieces (6; 60) in relation to the processing unit at a conveying speed (V), and
a feed unit (3; 30) for feeding the workpieces (6; 60) to the conveyor unit (2; 20), wherein the feed unit (3; 30) has at least one feed element (13; 130) which is configured to feed the workpieces (6; 60) to the conveyor unit (2; 20) at an infeed speed,
wherein the infeed speed and/or the acceleration of the feed element (13; 130) to the infeed speed can be set in a variable manner, and
the feed unit (3; 30) has a plurality of feed elements (13; 130) which are configured to feed the workpieces (6; 60) to the conveyor unit (2; 20) at an infeed speed, wherein the feed unit (3; 30) has at least one circulating conveyor track (10, 11; 100, 110) on which the plurality of feed elements (13; 130) can be moved in a circulating manner,
**characterised in that**
the infeed speed and/or the acceleration to the infeed speed of one or more feed elements (13; 130) can be set independently of the infeed speed of other feed elements (13; 130) of the feed unit (3; 30).

2. Device (1; 10) according to claim 1, **characterised in that** at least one feed element (13; 130) is configured to accelerate the workpieces (6; 60) to the conveying speed (V) of the conveyor unit (2; 20).

3. Device (1; 10) according to one of the preceding claims, **characterised in that** the plurality of feed elements (13; 130) can be moved independently of one another.

4. Device (1; 10) according to one of the preceding claims, **characterised in that** the feed unit (3; 30) has at least one drive, preferably two or more drives, which are preferably selected from linear motor, servo drive and/or rotary servo drive, via an in particular toothed belt and/or rack-and-pinion mechanism.

5. Device (1; 10) according to claim 4, **characterised in that** a plurality of feed elements (13; 130) in each case have a separate drive, wherein the feed elements (13; 130) can preferably be moved independently of one another.

6. Device (1; 10) according to one of the preceding claims, **characterised in that** the feed unit (3; 30) has at least one pair or a group of feed elements which run on different conveyor tracks (10, 11; 100, 110) and are synchronised with one another.

7. Device (1) according to claim 6, **characterised in that** at least some of the synchronised feed elements (13) are connected with one another by means of a conveyor rail (14, 16).

8. Device (1; 10) according to one of the preceding claims, **characterised in that** the feed elements (13; 130) are selected from latches, cams, grippers, suction devices.

9. Method for processing workpieces (6; 60) using a device (1; 10) according to one of the preceding claims, with the steps:
conveying the workpieces (6; 60) by means of the feed unit (3; 30), initially at a speed which is less than the conveying speed (V) of the conveyor unit (2; 20),
accelerating the workpieces (6; 60), by means of the feed unit (3; 30), to an infeed speed which substantially corresponds to the conveying speed (V) of the conveyor unit (2;20),
transferring the workpieces (6; 60) from the feed unit (3; 30) to the conveyor unit (2; 20), and
processing the workpieces (6; 60) by means of the processing unit.

10. Method according to claim 9, **characterised in that** the method steps are carried out in this order.

## Revendications

1. Dispositif (1 ; 10) pour usiner des pièces (6 ; 60) qui consistent de préférence au moins par sections en du bois, des matériaux à base de bois, du plastique ou similaire, comprenant
une unité d'usinage pour usiner les pièces (6 ; 60),
une unité de transport (2 ; 20) pour déplacer les pièces (6 ; 60) par rapport à l'unité de traitement à une vitesse de transport (V), et
une unité d'alimentation (3 ; 30) pour alimenter les pièces (6 ; 60) vers l'unité de transport (2 ; 20), dans laquelle l'unité d'alimentation (3 ; 30) présente au moins un élément d'alimentation (13 ; 130) qui est conçu pour alimenter les pièces (6 ; 60) vers l'unité de transport (2 ; 20) à une vitesse d'alimentation,
dans lequel
la vitesse d'alimentation et/ou l'accélération de l'élément d'alimentation (13 ; 130) peu(ven)t être ajustée(s) à la vitesse d'alimentation de manière variable, et
l'unité d'alimentation (3 ; 30) présente une pluralité d'éléments d'alimentation (13 ; 130) qui sont conçus pour alimenter les pièces (6 ; 60) vers l'unité de transport (2 ; 20) à une vitesse d'alimentation, dans lequel l'unité d'alimentation (3 ; 30) présente au moins une piste de transport (10, 11 ; 100, 110) en cours de circulation, sur laquelle la pluralité d'éléments d'alimentation (13 ; 130) peut être mise en circulation,
**caractérisé en ce que**,
la vitesse d'alimentation et/ou l'accélération peu(ven)t être ajustée(s) à la vitesse d'alimentation d'un ou de plusieurs élément(s) d'alimentation (13 ; 130) indépendamment de la vitesse d'alimentation d'autres éléments d'alimentation (13 ; 130) de l'unité d'alimentation (3 ; 30).

2. Dispositif (1 ; 10) selon la revendication 1, **caractérisé en ce qu'**au moins un élément d'alimentation (13 ; 130) est conçu pour accélérer les pièces (6 ; 60) à la vitesse de transport (V) de l'unité de transport (2 ; 20).

3. Dispositif (1; 10) selon l'une quelconque des revendications précédentes, **caractérisé en ce que** la pluralité d'éléments d'alimentation (13 ; 130) peut être déplacée indépendamment les uns des autres.

4. Dispositif (1 ; 10) selon l'une quelconque des revendications précédentes, **caractérisé en ce que** l'unité d'alimentation (3 ; 30) présente au moins un entraînement, de préférence deux ou plus de deux entraînements, qui sont de préférence sélectionnés parmi un moteur linéaire, un servomoteur et/ou un servomoteur rotatif par l'intermédiaire, en particulier, de courroies crantées et/ou d'un mécanisme à crémaillère.

5. Dispositif (1 ; 10) selon la revendication 4, **caractérisé en ce qu'**une pluralité d'éléments d'alimentation (13 ; 130) présente respectivement un entraînement séparé, dans lequel les éléments d'alimentation (13 ; 130) peuvent de préférence être déplacés indépendamment les uns des autres.

6. Dispositif (1 ; 10) selon l'une quelconque des revendications précédentes, **caractérisé en ce que** l'unité d'alimentation (3 ; 30) présente au moins une paire ou un groupe d'éléments d'alimentation qui s'étendent sur différentes pistes de transport (10, 11 ; 100, 110) et sont synchronisés les uns avec les autres.

7. Dispositif (1) selon la revendication 6, **caractérisé en ce qu'**au moins certains des éléments d'alimentation (13) synchronisés les uns avec les autres sont reliés les uns aux autres grâce à un rail de transport (14, 16).

8. Dispositif (1 ; 10) selon l'une quelconque des revendications précédentes, **caractérisé en ce que** les éléments d'alimentation (13 ; 130) sont sélectionnés parmi des cliquets, des cames, des pinces, des ventouses.

9. Procédé d'usinage de pièces (6 ; 60) avec utilisation d'un dispositif (1 ; 10) selon l'une quelconque des revendications précédentes, comprenant les étapes consistant à :
transporter les pièces (6 ; 60) au moyen de l'unité d'alimentation (3 ; 30) initialement à une vitesse qui est inférieure à la vitesse de transport (V) de l'unité de transport (2 ; 20),
accélérer les pièces (6 ; 60) au moyen de l'unité d'alimentation (3 ; 30) jusqu'à une vitesse d'alimentation qui correspond essentiellement à la vitesse d'alimentation (V) de l'unité d'alimentation (2 ; 20),
transférer les pièces (6 ; 60) de l'unité d'alimentation (3 ; 30) vers l'unité de transport (2 ; 20), et
usiner les pièces (6 ; 60) au moyen de l'unité d'usinage.

10. Procédé selon la revendication 9, **caractérisé en ce que** les étapes de procédé sont mises en œuvre dans cet ordre.
